# EUROPEAN PATENT SPECIFICATION

(11) **EP 4 332 426 B1**
(45) Date of publication and mention of the grant of the patent: **20.05.2026**
(21) Application number: 21939284.2
(22) Date of filing: 28.04.2021
(51) Int. Cl.: F17D 3/00, G06Q 50/06, F23K 5/00, F17D 1/04, F17D 3/05

(54) **HYDROGEN SUPPLY AND DEMAND SYSTEM AND HYDROGEN SUPPLY AND DEMAND METHOD**
WASSERSTOFFZUFUHR- UND -BEDARFSSYSTEM SOWIE WASSERSTOFFZUFUHR- UND -BEDARFSVERFAHREN
SYSTÈME ET PROCÉDÉ D'ALIMENTATION ET DE DEMANDE EN HYDROGÈNE

(43) Date of publication of application: 06.03.2024
(73) Proprietor: Hitachi, Ltd., Tokyo 100-8280 (JP)
(72) Inventor: WATANABE, Ayumi, Tokyo 100-8280 (JP); IIZUKA, Hidehiro, Tokyo 100-8280 (JP); KANI, Yuuko, Tokyo 100-8280 (JP); INAGAKI, Ryohei, Tokyo 100-8280 (JP); SASAKI, Takashi, Tokyo 100-8280 (JP); MIZUKAMI, Takaaki, Tokyo 100-8280 (JP); ISHIDA, Naoyuki, Tokyo 100-8280 (JP); FUJITA, Shinji, Tokyo 100-8280 (JP); YASHIKI, Tatsurou, Tokyo 100-8280 (JP)
(74) Representative: Mewburn Ellis LLP
(86) International application number: PCT/JP2021/017026
(87) International publication number: WO 2022/230123

(56) References cited:
- EP-B1- 2 979 743
- EP-B1- 3 303 904
- WO-A1-2013/177700
- CN-A- 111 379 975
- CN-A- 111 992 071
- JP-A- 2002 213 695
- JP-B2- 4 530 193
- US-A1- 2004 112 427
- US-A1- 2010 322 845
- US-B2- 9 531 024

## Description

### Technical Field

The present application relates to a hydrogen supply and demand system and a hydrogen supply and demand method regarding management and control of a supply situation when hydrogen produced by electrolysis of water utilizing renewable energy or the like or by reforming of natural gas is supplied to hydrogen users.

### Background Art

The Ministry of the Environment has started a "demonstration project of renewable energy electrolytic hydrogen production and hydrogen mixed gas supply and utilization" in 2019 (https://www.env.go.jp/press/106873-print.html). In this project, hydrogen is produced by electrolysis of water using electric power of wind power generation, and the hydrogen and simulant gas equivalent to city gas are mixed and supplied to a utilization site through a gas pipe. The mixed gas is utilized as it is in a water heater, a gas cologne, and the like.

PTL 1 provides, when a hydrogen-fueled facility and an existing city gas-fired facility are both employed by utilizing an existing city gas pipeline and a conduit network, as a method and a system allowing utilizing both of the facilities without any trouble, a city gas supply method for supplying mixed gas containing hydrogen gas and hydrocarbon-based gas to a consumer group via the conduit network. In the city gas supply method, in a first consumer group, after the hydrogen gas is separated from the mixed gas, the separated hydrogen gas is used and the remaining separated gas is returned to the conduit network, while in a second consumer group, after the hydrogen gas is separated from the mixed gas, the remaining separated gas is used and the separated hydrogen gas is returned to the conduit network.

During supply of the mixed gas through a gas grid (conduit network), unlike supply of conventional gas with uniform components such as city gas, it is necessary to monitor and manage not only a gas flow rate and a pressure but also a concentration of each component in the mixed gas. In addition, depending on a specification use of the mixed gas, required concentrations of the components in the mixed gas are different, and further, a concentration upper limit may be determined.

Furthermore, when a gas use site (consumer) connected to the gas grid uses only specific gas, there is a concern that concentration bias occurs in the gas grid. The concentration of each component of the mixed gas varies depending on gas mixing, diffusion, and flow caused by gas injection or extraction, and thus it is necessary to monitor and control composition in the gas grid on the basis of temporal variation.

PTL 1 presents a method and a system for supplying the mixed gas to the consumer group via the gas grid but does not present a means of monitoring and controlling the temporal change in the composition of the mixed gas in the gas grid.

PTL 2 proposes a method and system for supplying a mixed gas containing hydrogen gas and hydrocarbon-based gas to consumers via a conduit network.

### Citation List

### Patent Literature

PTL 1: JP 2002-243100 A (P2002-243100A)
PTL 2: JP4530193B2

### Summary of Invention

### Technical Problem

When hydrogen supplied from a gas grid is used, a required hydrogen concentration and a hydrogen concentration upper limit are determined. Thus, it is necessary to visualize and control the hydrogen concentration in the gas grid. Regarding hydrogen produced as clean energy, it is required to solve the problem of hydrogen supply and demand while satisfying economy, safety, convenience, and global warming countermeasures.

Therefore, an object of the present invention is to provide a hydrogen supply and demand system and a hydrogen supply and demand method capable of visualizing a temporal change in a hydrogen concentration in a gas grid for appropriate monitoring and control of the hydrogen concentration.

### Solution to Problem

Provided is a hydrogen supply and demand system including a visualization system of a hydrogen concentration configured, for a gas grid including a gas pipeline filled with hydrogen gas and other gas, to output a simulation result in consideration of a gas flow, convection caused by gas extraction or injection under pressure, and a diffusion state, using fluid information in the gas grid, pipeline/gas injection mechanism shape information, and operation schedules of a hydrogen supply site and a gas use site as inputs, and to visualize a temporal change in a hydrogen concentration at an arbitrary point in the gas grid. Also provided is a hydrogen supply and demand method including visualizing a temporal change in a hydrogen concentration at an arbitrary point in the gas grid.

### Advantageous Effects of Invention

According to the hydrogen supply and demand system and the hydrogen supply and demand method of the present invention, it is possible to visualize a temporal change in a hydrogen concentration in a gas grid to monitor and control the hydrogen concentration in the grid regarding hydrogen produced as clean energy, which allows hydrogen supply at a required concentration to where it is needed.

### Brief Description of Drawings

[FIG. 1] FIG. 1 is a configuration diagram of a hydrogen supply and demand system including a visualization system of a hydrogen concentration in a gas grid.
[FIG. 2] FIG. 2 is a screen example of the visualization system of the hydrogen concentration in the gas grid.
[FIG. 3] FIG. 3 is a screen example of the visualization system of the hydrogen concentration in a case where a gas use site is newly connected to the gas grid.
[FIG. 4] FIG. 4 is an explanatory diagram for explaining a processing flow of the visualization system of the hydrogen concentration.
[FIG. 5] FIG. 5 is a configuration diagram of the hydrogen supply and demand system including the visualization system of the hydrogen concentration in the gas grid according to a third embodiment.
[FIG. 6] FIG. 6 illustrates a processing flow of a control mechanism according to the third embodiment.
[FIG. 7] FIG. 7 is a configuration diagram of the hydrogen supply and demand system including the visualization system of the hydrogen concentration in the gas grid according to a fourth embodiment.
[FIG. 8] FIG. 8 is a configuration diagram of the hydrogen supply and demand system including the visualization system of the hydrogen concentration in the gas grid according to a fifth embodiment.
[FIG. 9] FIG. 9 is a configuration diagram of the hydrogen supply and demand system including the visualization system of the hydrogen concentration in the gas grid according to a sixth embodiment.

### Description of Embodiments

Hereinafter, embodiments of the present invention will be described with reference to the drawings. Note that the same components are denoted by the same reference signs, and a duplicate description thereof may be omitted. In addition, the present invention is not limited to the following embodiments.

### [First Embodiment]

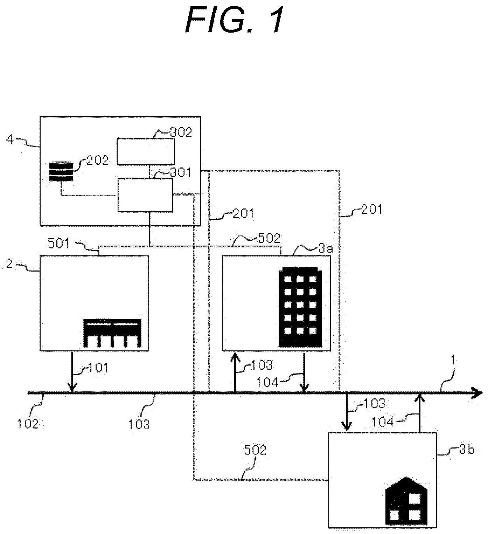

FIG. 1 is an explanatory diagram for explaining a configuration of a hydrogen supply and demand system including a visualization system of a hydrogen concentration in a gas grid of a first embodiment. Note that although this embodiment uses the entire configuration illustrated in FIG. 1, the present invention does not necessarily use the entire configuration and may use a part of it.

In this embodiment, the visualization system of the hydrogen concentration in the gas grid will be described. FIG. 1 is a schematic diagram of the gas grid and the visualization system of the hydrogen concentration according to this embodiment. In this embodiment, there will be described an example in which mixed gas of natural gas and hydrogen gas is supplied to the gas grid, where a hydrogen supply site (2), a gas use site (3a), and a gas use site (3b) are connected to a gas pipeline (1).

Note that although the mixed gas of the natural gas and the hydrogen gas is assumed in this embodiment, gas to be mixed with the hydrogen gas is not limited to the natural gas. In addition, the respective numbers of hydrogen supply sites and gas use sites may be one or more. The hydrogen supply site (2) indicates plant and facilities having a function of supplying the hydrogen gas to the gas pipeline (1). Here, the hydrogen gas of the hydrogen supply site (2) may be produced at the hydrogen supply site (2) or may be produced at another place.

The hydrogen gas (101) is injected from the hydrogen supply site (2) into the gas pipeline (1) filled with the natural gas (102), and the mixed gas (103) in which the hydrogen gas and the natural gas are mixed is supplied to the gas use sites (3a, 3b). The gas use sites (3a, 3b) take out a required amount of the hydrogen gas (101), the natural gas (102), or the mixed gas (103) from the gas pipeline (1) and return return gas (104) to the gas pipeline (1).

Here, the return gas (104) is gas that is not used at the gas use site (3a, 3b). For example, in a case where the gas use site (3a) uses only hydrogen, the natural gas (102) alone may be returned as the return gas (104), or gas in which the natural gas (102) and the hydrogen gas (101) that is not used are mixed and thus of which gas composition is different from that of the mixed gas may be returned to the gas pipeline (1) as the return gas.

A gas grid visualization site (4) is concomitantly provided in the gas grid and includes the visualization system of the hydrogen concentration (301) and a control mechanism (302). The visualization system of the hydrogen concentration in the gas grid (301) calculates a composition distribution in the gas grid using fluid information in the gas grid (201) that is periodically acquired and pipeline/gas injection mechanism shape information (202) that is acquired in advance as inputs.

Here, the fluid information is information including a flow velocity, a flow rate, a pressure, composition, and the like at an arbitrary point in the gas pipeline (1). The number of arbitrary points may be one or more. The fluid information may be directly measured by a sensor such as a pressure gauge or a flowmeter, or may be calculated by a soft sensor. The soft sensor corresponds to, for example, calculating a flow rate from the difference between pressures at arbitrary two points in the gas grid, calculating a flow rate from gas usage amounts at all gas use sites connected to the gas grid, or the like.

Furthermore, the visualization system of the hydrogen concentration in the gas grid (301) presents a temporal change in the hydrogen concentration in the gas grid on the basis of a simulation result. The simulation is based on fluid analysis in consideration of a gas flow, convection caused by gas extraction or injection under pressure, and a diffusion state. The composition distribution in the gas grid after any elapsed time is calculated on the basis of the fluid information in the gas grid (201), an operation schedule of the hydrogen supply site (501), operation schedules of the gas use sites (502), and the pipeline/gas injection mechanism shape information (202) acquired in advance. Here, the composition distribution in the gas grid indicates a concentration or a ratio of each component (hydrogen, natural gas) contained in the gas grid.

The pipeline/gas injection mechanism shape information is information including shapes, tube diameters, dimensions, and the like of the gas pipeline (1) and a mechanism used for gas injection. The pipeline/gas injection mechanism shape information is information used as conditions of the fluid analysis in the simulation, and is acquired in advance from design information of the gas grid, actual measurement results, and the like.

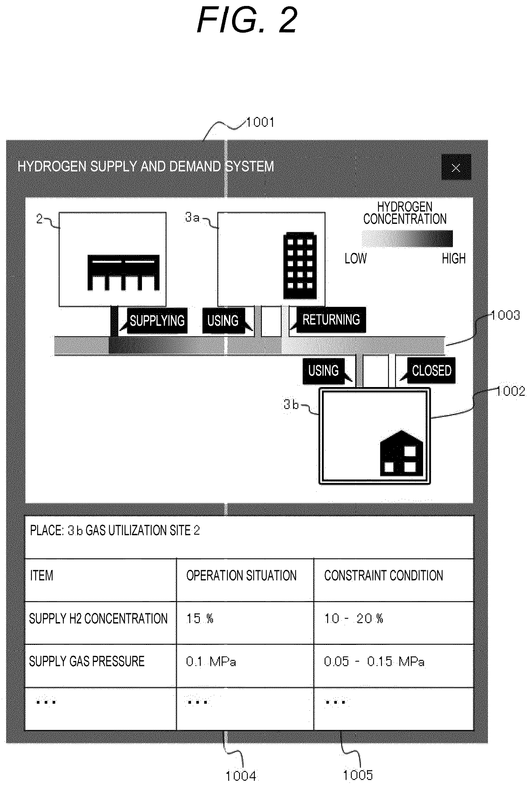

FIG. 2 illustrates an example of a screen (1001) of the visualization system of the hydrogen concentration in the gas grid. The visualization system of the hydrogen concentration in the gas grid (301) displays a gas grid structure display section (1002) that shows a structure of the gas grid, a grid monitoring section (1003) that presents the hydrogen concentration in the gas grid, and a fluid information display section (1004) that displays the fluid information in the gas grid.

The grid monitoring section (1003) may constantly present the hydrogen concentration at any predetermined point in the gas grid, or may present the hydrogen concentration at any point designated by an operator with a pointer. In addition, a change in hydrogen concentration distribution in the gas grid may be visually presented with color gradation. Furthermore, in addition to the hydrogen concentration distribution, the gas composition, the flow rate, and the like may be presented with color gradation. Furthermore, the hydrogen concentration in the gas grid may be displayed as a moving image from the current time to time after any elapsed time, or may be displayed as a still image at time after any elapsed time designated by the operator.

Here, the gas grid structure display section (1002) and the grid monitoring section (1003) may be displayed in an overlapping manner. Furthermore, a constraint condition displaying section (1005) that displays a constraint condition of the gas use site connected to the gas grid may be displayed together. Furthermore, a hydrogen gas supply amount from the hydrogen supply site connected to the gas grid to the gas grid, and a hydrogen gas usage amount and a natural gas usage amount at the gas use site may be displayed together.

The constraint condition of the gas use site is a condition that needs to be satisfied when the mixed gas is supplied, such as the gas composition required by the gas use site, lower limit values and upper limit values of the concentrations of hydrogen and natural gas, and the flow rate and the pressure of the mixed gas. The constraint condition of the gas pipeline is a condition that needs to be satisfied when gas flows through the gas pipeline (1), such as the flow rate and the pressure of the gas.

The visualization system of the hydrogen concentration (301) allows real-time monitoring of the distribution of the hydrogen concentration in the gas grid and confirmation of whether the constraint conditions of the gas use sites and the gas pipeline are satisfied. The visualization system of the hydrogen concentration (301) can also be used for selection of a gas use site or a hydrogen supply site to be connected to the gas grid. The visualization system of the hydrogen concentration in the gas grid

(301) is used to compare the hydrogen concentration distribution in the gas grid before and after installation of a gas use site or a hydrogen supply site, which allows determining whether the constraint conditions of the gas use sites and the gas pipeline are satisfied.

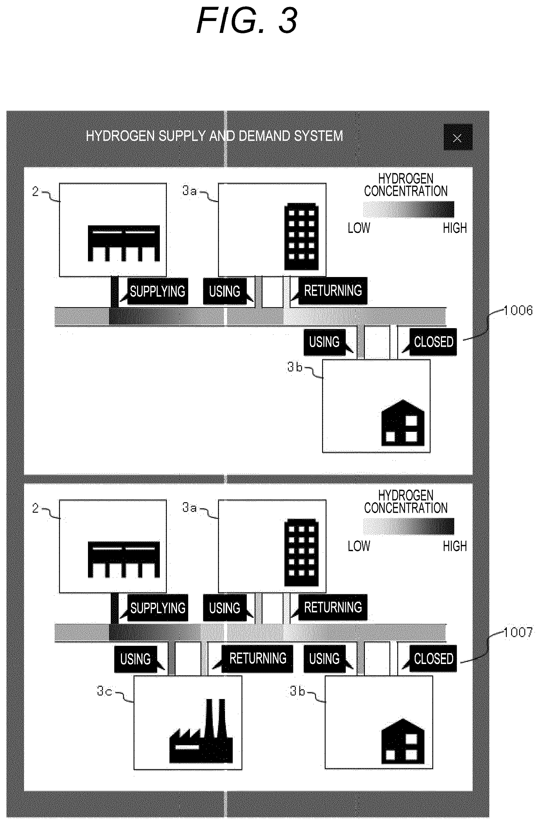

FIG. 3 is a screen example of the visualization system of the hydrogen concentration in a case where a gas use site is newly connected to the gas grid. An image before the addition of the gas use site (1006) and an image after the addition of the gas use site (1007) are displayed together as images of the gas grid structure display section (1002) and the grid monitoring section (1003), which makes it possible to compare the structure of the gas pipeline (1) and the hydrogen concentration distribution in the gas grid before and after the addition. In addition, a case where a connection point of the gas use site to the gas grid is changed may be displayed together so that similar comparison can be made.

### [Second Embodiment]

In this embodiment, a processing flow of the visualization system of the hydrogen concentration in the gas grid (301) according to the first embodiment and a supply availability determination mechanism will be described. According to this embodiment, it is possible to perform management to satisfy the constraint condition of the gas use site or the gas pipeline.

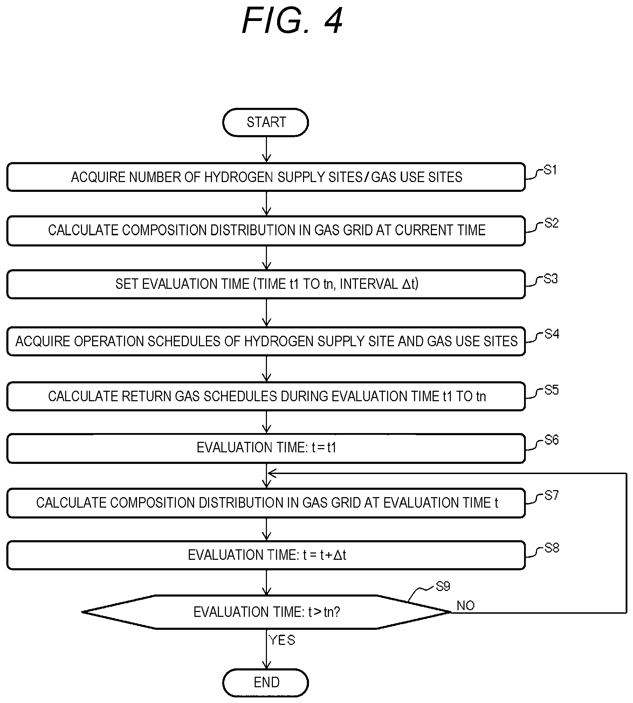

FIG. 4 is an explanatory diagram for explaining a processing flow of the visualization system of the hydrogen concentration. First, the supply availability determination mechanism of the visualization system of the hydrogen concentration (301) acquires the respective numbers of hydrogen supply sites and gas use sites connected to the gas grid (S1).

Next, the simulation is performed in consideration of the gas flow, the convection caused by gas extraction or injection under pressure, and the diffusion state, using the fluid information in the gas grid and the pipeline/gas injection mechanism shape information acquired in advance as inputs, and the current composition distribution in the gas grid is calculated (S2).

Next, an evaluation time is set (S3). In this embodiment, a case where the evaluation time is from the current time t1 to time tn and an evaluation interval is set to Δt will be described.

Next, the operation schedules of the hydrogen supply site and the gas use sites are acquired (S4). Here, the operation schedules are a hydrogen gas injection schedule at the hydrogen supply site and mixed gas extraction schedules at the gas use sites during the set evaluation time t1 to tn.

The hydrogen gas injection schedule is information including a hydrogen gas injection amount, an injection pressure, an injection flow rate, and the like with respect to time. The mixed gas extraction schedule is information including a mixed gas extraction amount, an extraction flow rate, mixed gas component usage amounts at the gas use site, and the like with respect to time.

The mixed gas component usage amount at the gas use site is a usage amount of each component (hydrogen gas, natural gas) contained in the mixed gas. In a case where the mixed gas is used as it is at the gas use site, the sum of the mixed gas component usage amounts at the gas use site coincides with a mixed gas usage amount. On the other hand, in a case where only a specific component is used at the gas use site, since a component that is not used is returned to the gas pipeline as the return gas, the sum of the mixed gas component usage amounts matches a value obtained by subtracting a return gas amount from the mixed gas usage amount.

Next, the simulation is performed in consideration of the gas flow, the convection caused by gas extraction or injection under pressure, and the diffusion state, using the mixed gas extraction schedules and the pipeline/gas injection mechanism shape information acquired in advance as inputs, and return gas schedules during the evaluation time t1 to tn are calculated (S5). Here, the return gas schedule is information including a return gas return amount, a return pressure, a return flow rate, and the like for each component contained in the mixed gas with respect to time.

Next, the simulation is performed in consideration of the gas flow, the convection caused by gas extraction or injection under pressure, and the diffusion state, using the fluid information in the gas grid at the current time, the hydrogen gas injection schedule, the mixed gas extraction schedules, and the return gas schedules during the evaluation time t1 to tn, and the pipeline/gas injection mechanism shape information acquired in advance as inputs, and the composition distribution in the gas grid during the evaluation time t1 to tn is calculated (S6 to S9). It is confirmed whether the constraint conditions of the gas use sites and the gas pipeline are satisfied on the basis of the composition distribution in the gas grid during the evaluation period t1 to tn.

As a result of the calculation, when the constraint conditions of the gas use sites and the gas pipeline are satisfied (S9: YES), the hydrogen gas injection schedule, the mixed gas extraction schedules, and the return gas schedules during the evaluation time t1 to tn can be executed. On the other hand, when the constraint conditions of the gas use sites and the gas pipeline are not satisfied (S9: NO), it is necessary to change the hydrogen gas injection schedule, the mixed gas extraction schedules, and the return gas schedules on the basis of the composition distribution in the gas grid during the evaluation period t1 to tn.

Regarding the change of the hydrogen gas injection schedule, the mixed gas extraction schedules, and the return gas schedules, determination and reset may be performed by the operator or a result automatically determined by the supply availability determination mechanism may be adopted. For example, the supply availability determination mechanism can perform automatic determination by assigning priorities to the following change methods.

First, when the hydrogen concentration is insufficient at a specific gas use site during the evaluation period t1 to tn, there is a method of suspending mixed gas extraction at a gas use site with low priority. In addition, there is a method of increasing the hydrogen gas injection amount and an injection frequency so that the hydrogen concentration in the gas pipeline and at the gas use site increases.

Alternatively, in a case where a gas use site that does not require the hydrogen gas utilizes the mixed gas as it is, there is a method of causing the gas use site that does not require the hydrogen gas to use only the natural gas and to return the hydrogen gas so that the hydrogen concentration in the gas pipeline increases. Furthermore, when the hydrogen concentration is insufficient at a specific gas use site during an evaluation period t1 to tx (tx < tn), there is a method of delaying the mixed gas extraction schedule at the specific gas use site so that the concentration of the mixed gas in the gas pipeline and at the gas use site is secured.

### [Third Embodiment]

In this embodiment, there will be described the hydrogen supply and demand system in which a control mechanism (303) for adjusting a hydrogen injection amount and a gas flow rate in the gas pipeline (1) is provided in place of the supply availability determination mechanism in the visualization system of the hydrogen concentration in the gas grid (301) according to the first embodiment. According to this embodiment, it is possible to perform management to satisfy the constraint condition of the gas use site or the gas pipeline by adjusting the hydrogen injection amount from the hydrogen supply site (2) and the flow rate in the gas pipeline (1).

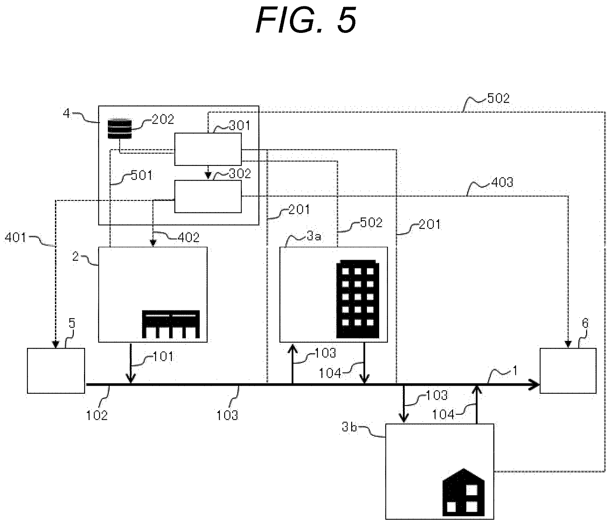

FIG. 5 is an explanatory diagram for explaining a configuration of the hydrogen supply and demand system including the visualization system of the hydrogen concentration in the gas grid of the third embodiment. In this embodiment, as illustrated in FIG. 5, a natural gas supply site (5) and a gas discharge site (6) are added to a visualization coverage in the gas grid according to the first embodiment. The natural gas is supplied from the natural gas supply site (5) to the gas pipeline (1) and is extracted from the gas discharge site (6) via the gas pipeline (1). As a result, the gas flow is formed in a certain direction in the gas pipeline (1).

The control mechanism (302) transmits natural gas supply amount information (401) indicating a control target of a natural gas supply amount to the natural gas supply site (5) to control the natural gas supply amount. In addition, hydrogen gas supply amount information (402) indicating a control target of a hydrogen gas supply amount is transmitted to the hydrogen supply site (2) to control the hydrogen gas supply amount. In addition, mixed gas extraction amount information (403) indicating a control target of a mixed gas discharge amount is transmitted to the gas discharge site (6) to control the mixed gas extraction amount.

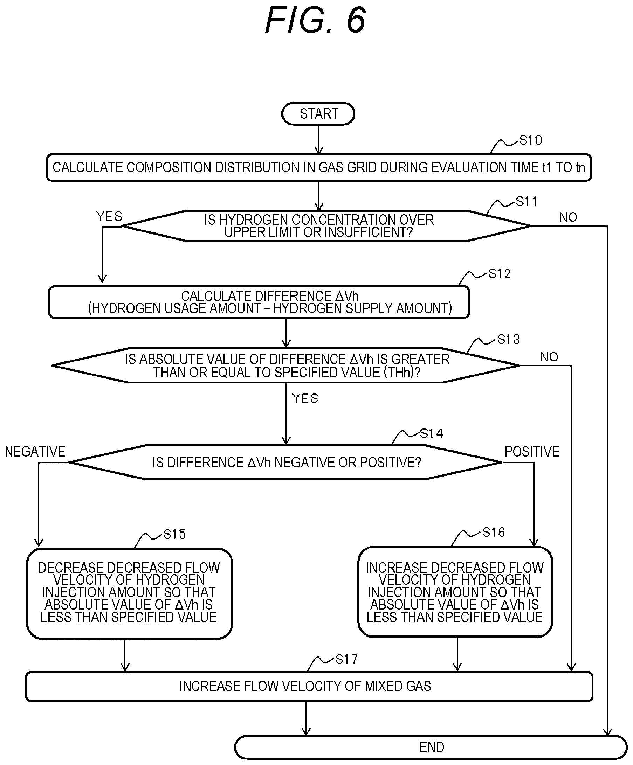

FIG. 6 is an explanatory diagram for explaining a processing flow of the control mechanism of the visualization system of the hydrogen concentration. First, the visualization system of the hydrogen concentration (301) calculates the hydrogen concentration distribution in the gas grid during the evaluation period t1 to tn through the processing from (S1) to (S9) in FIG. 4 described in the second embodiment (S10).

When the constraint conditions of the gas use sites and the gas pipeline are not satisfied in the composition distribution in the gas grid during the evaluation period t1 to tn (S11: YES), the control mechanism (302) performs control to satisfy the constraint conditions of the gas use sites and the gas pipeline by controlling the hydrogen injection amount at the hydrogen supply site and the gas flow.

Next, the difference ΔVh between the hydrogen gas supply amount (integrated value) and the hydrogen gas usage amount (integrated value) scheduled for the entire gas grid during the evaluation period t1 to tn is calculated (S12).

When the absolute value of the difference ΔVh is greater than or equal to a specified value (THh) (S13: YES), the hydrogen injection amount at the hydrogen supply site is adjusted.

When the difference ΔVh is a negative value (hydrogen gas supply amount (integrated value) > hydrogen gas usage amount (integrated value)) (S14: negative), the hydrogen injection amount at the hydrogen supply site is decreased so that the absolute value of ΔVh is less than the specified value (S15). When the difference ΔVh is a positive value (hydrogen gas supply amount (integrated value) < hydrogen gas usage amount (integrated value)) (S14: positive), the hydrogen injection amount at the hydrogen supply site is increased so that the absolute value of ΔVh is less than the specified value (S16).

When the absolute value of the difference ΔVh is less than the specified value (THh) and the hydrogen gas concentration in a part of the evaluation period or a part of the gas grid is over the upper limit (S13: NO), the flow velocity of the mixed gas is increased to make the hydrogen concentration uniform.

In this embodiment, although the description has been made for a case where the hydrogen gas is over the concentration upper limit or insufficient, the control can be similarly performed also in a case where the natural gas is over the concentration upper limit or insufficient.

### [Fourth Embodiment]

In this embodiment, there will be described a case where mixed gas extraction is discontinuously performed from a terminal end of the gas grid by a tank truck as a gas discharge site in the hydrogen supply and demand system according to the third embodiment. According to this embodiment, when the gas composition in the gas pipeline (1) is biased, it is possible to increase the gas flow velocity in the gas pipeline (1) to stabilize the gas composition.

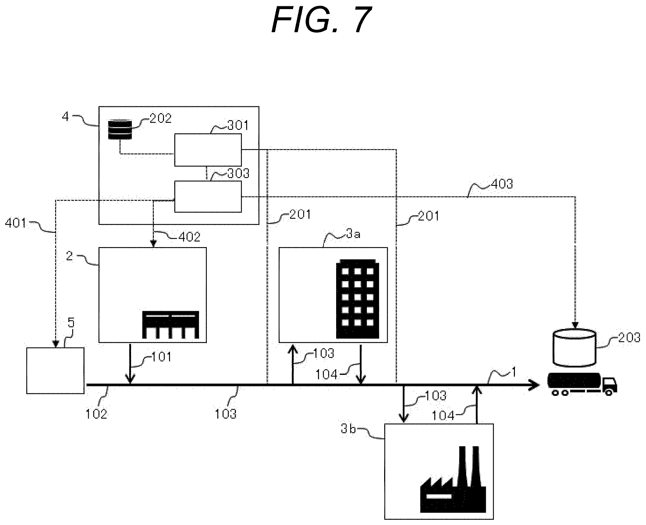

FIG. 7 illustrates an explanatory diagram for explaining a configuration of the hydrogen supply and demand system including the visualization system of the hydrogen concentration in the gas grid of the fourth embodiment. In FIG. 7, the operation schedule of the hydrogen supply site (501) and the operation schedules of the gas use sites (502) are not described for the sake of visibility.

When mixed gas extraction is discontinuously performed from the terminal end of the gas grid by the tank truck as the gas discharge site, a mixed gas extraction schedule is formulated so that the flow of the mixed gas in the gas pipeline (1) is maintained. The mixed gas extraction increases the gas flow velocity in the gas pipeline (1).

In this embodiment, it is assumed that the gas use sites (3a, 3b) connected to the gas grid use the hydrogen gas. When the gas use sites (3a, 3b) use the hydrogen gas, the gas use sites (3a, 3b) extract the mixed gas from the gas pipeline (1), use the hydrogen gas in the mixed gas, and return the natural gas that is not used as the return gas. Repetition of this causes a phenomenon in which the natural gas concentration increases and the hydrogen gas concentration decreases in the gas pipeline (1).

When the gas pipeline (1) is filled with the natural gas, gas diffusion in the gas pipeline (1) works as a driving force to transport the hydrogen gas to the gas use sites (3a, 3b). However, when the gas use site (3a, 3b) is away from the hydrogen gas supply site (2), it takes time for diffusion and a required amount of the hydrogen gas may not be able to be supplied to the gas use site (3a, 3b).

Thus, in this embodiment, the gas flow velocity in the gas pipeline (1) is increased even when the gas pipeline (1) is filled with the natural gas so that the gas diffusion and the flow of the mixed gas work as a driving force to transport the hydrogen gas and a required amount of the hydrogen gas is supplied to the gas use site (3a, 3b). Note that the gas flow velocity in the gas pipeline (1) is set by a schedule of mixed gas extraction by the tank truck (203).

In this embodiment, although direct extraction of the mixed gas by the tank truck has been described, a gas retention section that temporarily holds the mixed gas may be provided in the gas discharge site. The mixed gas is extracted to the gas retention section and gas extraction from the gas retention section is performed by the tank truck at regular intervals, which allows continuous extraction of the mixed gas.

According to the visualization system of the hydrogen concentration, it is possible to confirm a change in the distribution of the hydrogen concentration in the grid when the flow velocity of the mixed gas is changed and to check in advance whether the constraint conditions of the gas use sites and the gas pipeline are satisfied.

### [Fifth Embodiment]

In this embodiment, there will be described a case where gas retention sites (7a, 7b) are installed instead of the natural gas supply site (5) and the mixed gas discharge site (6) for the gas pipeline (1) in the hydrogen supply and demand system according to the third embodiment. According to this embodiment, when the gas composition in the gas pipeline (1) is biased, it is possible to continuously change the gas flow velocity in the gas pipeline (1) to stabilize the gas composition.

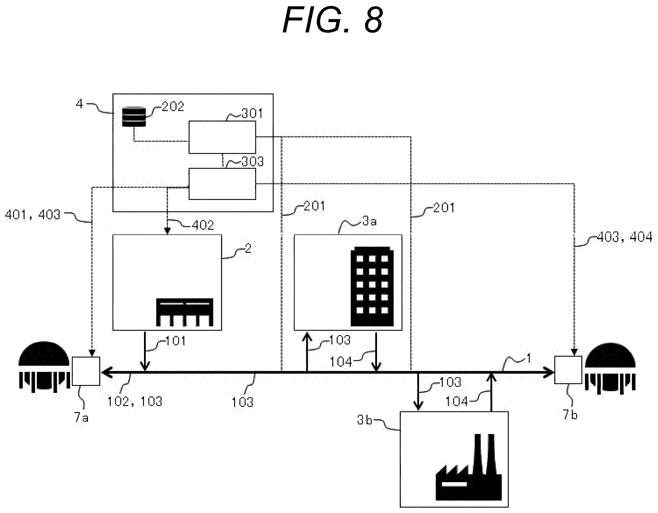

FIG. 8 illustrates an explanatory diagram for explaining a configuration of the hydrogen supply and demand system including the visualization system of the hydrogen concentration in the gas grid of the fifth embodiment. In FIG. 8, the operation schedule of the hydrogen supply site (501) and the operation schedules of the gas use sites (502) are not described for the sake of visibility.

In this embodiment, as in the fourth embodiment, it is assumed that the gas use sites (3a, 3b) connected to the gas grid use the hydrogen gas. When the mixed gas in the gas grid is used and the gas flow is formed in the gas pipeline (1), the natural gas is supplied from an upstream gas retention site (7a).

When the gas pipeline (1) is filled with the natural gas and the gas flow decreases as a result of use of the hydrogen gas in the gas pipeline (1) at the gas use sites (3a, 3b), gas extraction from the gas pipeline (1) is performed using the upstream gas retention site (7a) and the natural gas is supplied from a downstream gas retention site (7b) to reverse the direction of the gas flow.

The control mechanism (302) transmits the natural gas supply amount information (401) and the mixed gas extraction amount information (403) to the upstream gas retention site (7a) to control the gas flow in the gas pipeline (1). In addition, the mixed gas extraction amount information (403) and mixed gas reverse feed amount information (404) indicating a control target of a mixed gas reverse feed amount are transmitted to the downstream gas retention site (7b) to control the gas flow in the gas pipeline (1).

This allows the gas flow velocity in the gas pipeline (1) to increase in accordance with the hydrogen gas supply amount and the mixed gas extraction amount when the gas pipeline (1) is filled with the natural gas and the gas flow decreases.

In this embodiment, in addition to the advantageous effect of the fourth embodiment, it is possible to continuously change the gas flow velocity and thus to control the gas flow velocity more precisely. According to the visualization system of the hydrogen concentration (301), it is possible to confirm a change in the distribution of the hydrogen concentration in the gas grid when the flow velocity of the mixed gas is changed and to check in advance whether the constraint conditions of the gas use sites and the gas pipeline are satisfied.

### [Sixth Embodiment]

In this embodiment, there will be described a case where the gas pipeline (1) has a circular shape and a pressure adjustment mechanism (8) is provided to control the gas flow velocity in the hydrogen supply and demand system according to the third embodiment. According to this embodiment, when the gas composition in the gas pipeline (1) is biased, it is possible to continuously change the gas flow velocity in the gas pipeline (1) to stabilize the gas composition.

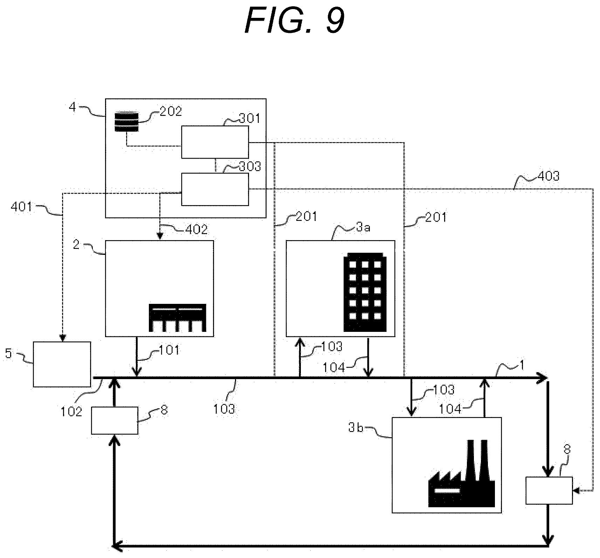

FIG. 9 illustrates an explanatory diagram for explaining a configuration of the hydrogen supply and demand system including the visualization system of the hydrogen concentration in the gas grid of the sixth embodiment. In FIG. 9, the operation schedule of the hydrogen supply site (501) and the operation schedules of the gas use sites (502) are not described for the sake of visibility.

In this embodiment, the gas pipeline (1) of the gas grid has a circular shape and the pressure adjustment mechanism (8) controls the pressure to constantly circulate the mixed gas in the gas pipeline (1). The mixed gas in the gas pipeline (1) flows in a certain direction, and thus both of the gas diffusion and the gas flow work as a driving force to transport the hydrogen gas supplied at the hydrogen supply site (2). This makes the hydrogen gas concentration uniform in the gas pipeline (1) in the gas grid, and the mixed gas having the stable hydrogen concentration can be supplied to the gas use sites (3a, 3b).

### Reference Signs List

- 1: gas pipeline
- 2: hydrogen supply site
- 3a: gas use site 1
- 3b: gas use site 2
- 4: gas grid visualization site
- 5: natural gas supply site
- 6: gas discharge site
- 7a: upstream gas retention site
- 7b: downstream gas retention site
- 8: pressure regulator
- 101: hydrogen gas
- 102: natural gas
- 103: mixed gas
- 104: return gas
- 201: fluid information
- 202: pipeline/gas injection mechanism shape information
- 203: schedule of mixed gas extraction by tank truck
- 301: visualization system of a hydrogen concentration
- 302: control mechanism
- 303: control mechanism
- 401: natural gas supply amount information
- 402: hydrogen gas supply amount information
- 403: mixed gas extraction amount information
- 404: mixed gas reverse feed amount information
- 501: operation schedule of hydrogen supply site
- 502: operation schedule of gas use site

## Claims

1. A hydrogen supply and demand system comprising a visualization system (301) of a hydrogen concentration, **characterised in that** the visualization system (301) is configured, for a gas grid including a gas pipeline (1) filled with hydrogen gas (101) and other gas (102), to output a simulation result in consideration of a gas flow, convection caused by gas extraction or injection under pressure, and a diffusion state, using fluid information (201) in the gas grid, pipeline/gas injection mechanism shape information (202), and operation schedules (501, 502) of a hydrogen supply site (2) and a gas use site (3a, 3b) as inputs, and to visualize a temporal change in the hydrogen concentration at an arbitrary point in the gas grid.

2. The hydrogen supply and demand system according to claim 1, wherein gas composition in the gas grid is controlled by adjusting at least one of an injection amount of the hydrogen gas into the gas grid and a gas flow velocity in the gas pipeline (1).

3. The hydrogen supply and demand system according to claim 2, wherein the gas flow velocity in the gas pipeline (1) is adjusted by an extraction amount when gas extraction is discontinuously performed from a terminal end of the gas grid.

4. The hydrogen supply and demand system according to claim 2, wherein gas retention sites are provided at a start end and a terminal end of the gas grid, and the gas flow velocity in the gas pipeline (1) is adjusted by gas supply from the gas retention sites or gas extraction to the gas retention sites.

5. The hydrogen supply and demand system according to claim 2, wherein the gas grid has a circular shape and includes a pressure adjustment mechanism, and gas in the gas pipeline (1) is circulated by controlling a pressure in the gas grid having a tubular shape.

6. The hydrogen supply and demand system according to claim 5, wherein the pressure adjustment mechanism is configured to control the gas flow velocity in the gas grid having the circular shape.

7. The hydrogen supply and demand system according to claim 1, comprising, as the visualization system (301) of the hydrogen concentration, a gas grid structure display section configured to show a structure of the gas grid, a grid monitoring section configured to present the hydrogen concentration in the gas grid, a fluid information display section configured to display fluid information in the gas grid, or a constraint condition display section configured to display a constraint condition of the gas use site (3a, 3b) connected to the gas grid.

8. A hydrogen supply and demand method **characterised by**: for a gas grid including a gas pipeline (1) filled with hydrogen gas (101) and other gas (102), outputting a simulation result in consideration of a gas flow, convection caused by gas extraction or injection under pressure, and a diffusion state, using fluid information (201) in the gas grid, pipeline/gas injection mechanism shape information (202), and operation schedules (501, 502) of a hydrogen supply site (2) and a gas use site (3a, 3b) as inputs, and visualizing a temporal change in a hydrogen concentration at an arbitrary point in the gas grid.

## Patentansprüche

1. Wasserstoffangebot- und -nachfragesystem, umfassend ein Visualisierungssystem (301) für eine Wasserstoffkonzentration, **dadurch gekennzeichnet, dass** das Visualisierungssystem (301) für ein Gasnetz ausgelegt ist, das eine mit Wasserstoffgas (101) und anderem Gas (102) gefüllte Gasleitung (1) umfasst, um ein Simulationsergebnis in Bezug auf eine Gasströmung, durch Gasextraktion oder -injektion unter Druck bewirkte Konvektion und einen Diffusionszustand unter Verwendung von Fluidinformationen (201) in dem Gasnetz, Leitungs-/Gasinjektionsmechanismusforminformationen (202) und Betriebsplänen (501, 502) einer Wasserstoffzufuhrstelle (2) und einer Gasnutzungsstelle (3a, 3b) als Eingaben auszugeben und eine zeitliche Änderung der Wasserstoffkonzentration an einem beliebigen Punkt in dem Gasnetz zu visualisieren.

2. Wasserstoffangebot- und -nachfragesystem nach Anspruch 1, wobei die Gaszusammensetzung in dem Gasnetz durch Einstellen von zumindest einem aus einer Injektionsmenge des Wasserstoffgases in das Gasnetz und einer Gasströmungsgeschwindigkeit in der Gasleitung (1) gesteuert wird.

3. Wasserstoffangebot- und -nachfragesystem nach Anspruch 2, wobei die Gasströmungsgeschwindigkeit in der Gasleitung (1) um eine Extraktionsmenge angepasst wird, wenn von einem Abschluss-Ende des Gasnetzes nichtkontinuierlich Gasextraktion erfolgt.

4. Wasserstoffangebot- und -nachfragesystem nach Anspruch 2, wobei Gasretentionsstellen an einem Start-Ende und einem Abschluss-Ende des Gasnetzes bereitgestellt sind und die Gasströmungsgeschwindigkeit in der Gasleitung (1) durch Gaszufuhr von den Gasretentionsstellen oder Gasextraktion zu den Gasretentionsstellen angepasst wird.

5. Wasserstoffangebot- und -nachfragesystem nach Anspruch 2, wobei das Gasnetz eine kreisförmige Form aufweist und einen Druckeinstellmechanismus umfasst und wobei Gas in der Gasleitung (1) durch Steuern des Drucks in dem Gasnetz, das eine kreisförmige Form aufweist, zirkuliert wird.

6. Wasserstoffangebot- und -nachfragesystem nach Anspruch 5, wobei der Druckeinstellmechanismus dazu ausgelegt ist, die Gasströmungsgeschwindigkeit in dem Gasnetz, das die kreisförmige Form aufweist, zu steuern.

7. Wasserstoffangebot- und -nachfragesystem nach Anspruch 1, umfassend, als Visualisierungssystem (301) der Wasserstoffkonzentration, einen Gasnetzstrukturanzeigeabschnitt, der dazu ausgelegt ist, eine Struktur des Gasnetzes zu zeigen, einen Netzüberwachungsabschnitt, der dazu ausgelegt ist, die Wasserstoffkonzentration in dem Gasnetz zu präsentieren, einen Fluidinformationsanzeigeabschnitt, der dazu ausgelegt ist, Fluidinformationen in dem Gasnetz anzuzeigen, oder einen Einschränkungszustandsanzeigeabschnitt, der dazu ausgelegt ist, einen Einschränkungszustand der mit dem Gasnetz verbundenen Gasnutzungsstelle (3a, 3b) anzuzeigen.

8. Wasserstoffangebot- und -nachfrageverfahren, das durch Folgendes gekennzeichnet ist: für ein Gasnetz, das eine mit Wasserstoffgas (101) und anderem Gas (102) gefüllte Gasleitung (1) umfasst, Ausgeben eines Simulationsergebnisses in Bezug auf eine Gasströmung, durch Gasextraktion oder -injektion unter Druck bewirkte Konvektion und einen Diffusionszustand unter Verwendung von Fluidinformationen (201) in dem Gasnetz, Leitungs-/Gasinjektionsmechanismusforminformationen (202) und Betriebsplänen (501, 502) einer Wasserstoffzufuhrstelle (2) und einer Gasnutzungsstelle (3a, 3b) als Eingaben und Visualisieren einer zeitlichen Änderung der Wasserstoffkonzentration an einem beliebigen Punkt in dem Gasnetz.

## Revendications

1. Système d'alimentation et de demande d'hydrogène comprenant un système de visualisation (301) d'une concentration d'hydrogène, **caractérisé en ce que** le système de visualisation (301) est configuré, pour un réseau de gaz comprenant une canalisation de gaz (1) remplie de gaz hydrogène (101) et d'un autre gaz (102), pour délivrer en sortie un résultat de simulation en considération d'un écoulement de gaz, d'une convection causée par une extraction ou une injection de gaz sous pression, et d'un état de diffusion, en utilisant, en tant qu'entrées, des informations de fluide (201) dans le réseau de gaz, des informations de forme de mécanisme de canalisation/d'injection de gaz (202), et des plannings d'exploitation (501, 502) d'un site d'alimentation d'hydrogène (2) et d'un site d'utilisation de gaz (3a, 3b), et pour visualiser un changement temporel de la concentration d'hydrogène au niveau d'un point arbitraire dans réseau de gaz.

2. Système d'alimentation et de demande d'hydrogène selon la revendication 1, dans lequel la composition du gaz dans le réseau de gaz est commandée en ajustant au moins une certaine parmi une quantité d'injection du gaz hydrogène dans le réseau de gaz et une vitesse d'écoulement de gaz dans la canalisation de gaz (1).

3. Système d'alimentation et de demande d'hydrogène selon la revendication 2, dans lequel la vitesse d'écoulement de gaz dans la canalisation de gaz (1) est ajustée au moyen d'une quantité d'extraction lorsqu'une extraction de gaz est effectuée de manière discontinue depuis une extrémité terminale du réseau de gaz.

4. Système d'alimentation et de demande d'hydrogène selon la revendication 2, dans lequel des sites de rétention de gaz sont prévus à une extrémité de départ et à une extrémité terminale du réseau de gaz, et la vitesse d'écoulement de gaz dans la canalisation de gaz (1) est ajustée par une fourniture de gaz depuis les sites de rétention de gaz ou une extraction de gaz vers les sites de rétention de gaz.

5. Système d'alimentation et de demande d'hydrogène selon la revendication 2, dans lequel le réseau de gaz présente une forme circulaire et comprend un mécanisme d'ajustement de pression, et le gaz dans la canalisation de gaz (1) est mis en circulation en commandant une pression dans le réseau de gaz présentant une forme tubulaire.

6. Système d'alimentation et de demande d'hydrogène selon la revendication 5, dans lequel le mécanisme d'ajustement de pression est configuré pour commander la vitesse d'écoulement de gaz dans le réseau de gaz présentant la forme circulaire.

7. Système d'alimentation et de demande d'hydrogène selon la revendication 1, comprenant, en tant que système de visualisation (301) de la concentration d'hydrogène, une section d'affichage de structure de réseau de gaz configurée pour montrer une structure de réseau de gaz, une section de surveillance du réseau configurée pour présenter la concentration d'hydrogène dans le réseau de gaz, une section d'affichage d'informations de fluide configurée pour afficher des informations de fluide dans le réseau de gaz, ou une section d'affichage de condition de contrainte configurée pour afficher une condition de contrainte du site d'utilisation de gaz (3a, 3b) connecté au réseau de gaz.

8. Procédé d'alimentation et de demande d'hydrogène, **caractérisé par** les étapes consistant à : pour un réseau de gaz comprenant une canalisation de gaz (1) remplie de gaz hydrogène (101) et d'un autre gaz (102), délivrer en sortie un résultat de simulation en considération d'un écoulement de gaz, d'une convection causée par une extraction ou une injection de gaz sous pression, et d'un état de diffusion, en utilisant, en tant qu'entrées, des informations de fluide (201) dans le réseau de gaz, des informations de forme de mécanisme de canalisation/d'injection de gaz (202), et des plannings d'exploitation (501, 502) d'un site d'alimentation d'hydrogène (2) et d'un site d'utilisation de gaz (3a, 3b), et visualiser un changement temporel de la concentration d'hydrogène au niveau d'un point arbitraire du réseau de gaz.
